(19) Europäisches Patentamt
European Patent Office
Office européen des brevets

(11) EP 1 627 009 B1

(12) EUROPÄISCHE PATENTSCHRIFT

(45) Veröffentlichungstag und Bekanntmachung des Hinweises auf die Patenterteilung:
**23.08.2006 Patentblatt 2006/34**

(21) Anmeldenummer: **04731922.3**

(22) Anmeldetag: **10.05.2004**

(51) Int Cl.:
*C08J 3/12* (2006.01) *C04B 24/26* (2006.01)

(86) Internationale Anmeldenummer:
**PCT/EP2004/004959**

(87) Internationale Veröffentlichungsnummer:
**WO 2004/101657 (25.11.2004 Gazette 2004/48)**

# (54) VERFAHREN ZUR HERSTELLUNG VON POLYMERPULVERN

METHOD FOR THE PRODUCTION OF POLYMER POWDERS

PROCEDE DE PRODUCTION DE POUDRES POLYMERES

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.05.2003 DE 10322787**

(43) Veröffentlichungstag der Anmeldung:
**22.02.2006 Patentblatt 2006/08**

(73) Patentinhaber: **BASF Aktiengesellschaft**
**67056 Ludwigshafen (DE)**

(72) Erfinder:
- **PAKUSCH, Joachim**
  **67346 Speyer (DE)**
- **KOPPERS, Markus**
  **29683 Bad Fallingbostel (DE)**
- **GASCHLER, Wolfgang**
  **69126 Heidelberg (DE)**
- **SACK, Heinrich**
  **67454 Hassloch (DE)**
- **SCHMIDT-THÜMMES, Jürgen**
  **67141 Neuhofen (DE)**
- **DENU, Hans-Jürgen**
  **67159 Friedelsheim (DE)**

(56) Entgegenhaltungen:
**EP-A- 0 601 518** **EP-A- 0 861 867**
**EP-A- 0 924 241** **EP-A- 1 184 406**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Polymerpulvern durch Verdampfen der flüchtigen Bestandteile aus wässrigen Dispersionen filmbildender Polymere P, das dadurch gekennzeichnet ist, dass die wässrige Polymerdispersion vor dem Verdampfen der flüchtigen Bestandteile noch Trocknungshilfsmittel T aufweist, die in einer Menge von 0,1 bis 80 Gew.-%, bezogen auf das Polymer P der Dispersion, zugegen sind, wobei als Trocknungshilfsmittel T Polyvinylformamid verwendet wird.

Weiterhin betrifft die vorliegende Erfindung die nach diesem Verfahren erhältlichen Polymerpulver, deren Verwendung als Bindemittel sowie mineralische Bindebaustoffe, welche derartige Polymerpulver enthalten.

Wäßrige Dispersionen filmbildender Polymere finden breite Anwendung, beispielsweise als Cobindemittel für mineralische Baustoffe oder als Bindemittel, insbesondere für Kunstharzputze oder hochpigmentierte Innenfarben, Klebstoffe oder Beschichtungsmittel. Häufig ist es jedoch erwünscht, nicht die wäßrige Polymerdispersion selber, sondern das darin enthaltene Polymer in Pulverform einzusetzen.

Um das filmbildende Polymer in Pulverform zu erhalten, wird die Dispersion einem Trocknungsvorgang unterzogen, bei dem die flüchtigen Bestandteile der Dispersion nach einem geeigneten Verfahren, beispielsweise mittels Sprühtrocknung oder Gefriertrocknung, verdampft werden. Dabei ist zu beachten, dass die Polymerisatteilchen der wässrigen Dispersion beim Verdampfen des wässrigen Dispergiermediums irreversibel miteinander aggregieren und Sekundärteilchen bilden können. Die Sekundärteilchenbildung führt zu einer schlechteren Redispergierbarkeit, in der Regel einhergehend mit schlechteren anwendungstechnischen Eigenschaften des Pulvers. Ausserdem führt sie zur Belagbildung an den Trocknerwänden und verringert so die Pulverausbeute.

Um die irreversible Sekundärteilchenbildung bei der Pulverherstellung zu verhindern oder zumindest zu verringern, setzt man Trocknungshilfsmittel ein. Diese werden vielfach auch als Sprühhilfsmittel bezeichnet, da die Sprühtrocknung die Bildung irreversibel agglomerierter Sekundärteilchen besonders fördert. Dieser Effekt ist um so ausgeprägter, je niedriger die Glasübergangstemperatur (und damit die Erweichungstemperatur oder die Mindestfilmbildetemperatur) der Polymerteilchen ist, insbesondere dann, wenn sie unterhalb der Trocknungstemperatur liegt.

Gleichzeitig mindern Trocknungshilfsmittel in der Regel die Ausbildung von an der Trocknerwand haftenbleibendem Polymerbelag und bewirken so eine Erhöhung der Pulverausbeute.

Als Trocknungshilfsmittel werden häufig, und nicht zuletzt aufgrund ihres günstigen Preises, die Salze, vorzugsweise die Alkalimetall-, Erdalkalimetall- oder Ammoniumsalze von Kondensationsprodukten aromatischer Sulfonsäuren mit Formaldehyd (Arylsulfonsäure-Formaldehyd-Kondensationsprodukte) eingesetzt.

Die DE-A-24 45 813 beschreibt ein in wäßrigen Systemen redispergierbares pulverförmiges Polymer, das als Trocknungshilfsmittel 1 bis 20 Gew.-% eines wasserlöslichen, sulfonsäure- oder sulfonatgruppenhaltigen Kondensationsproduktes aus aromatischen Kohlenwasserstoffen und Formaldehyd, beispielsweise Phenolsulfonsäure- oder Naphthalinsulfonsäure-Formaldehyd-Kondensate, enthält.

Aus der WO 98/03577 sind Salze von Naphthalinsulfonsäure-Formaldehyd-Kondensationsprodukten mit einem zahlenmittleren Molekulargewicht $M_n$ unterhalb 1500 Dalton bekannt, die besonders gute Sprühhilfsmitteleigenschaften aufweisen.

In ähnlicher Weise beschreibt die EP-A-407 889 die Verwendung eines wasserlöslichen Alkali- oder Erdalkalisalzes eines Phenolsulfonsäure-Formaldehyd-Kondensationsproduktes als Sprühhilfsmittel zur Herstellung von in Wasser redispergierbaren Polymerisatpulvern.

Aus der WO 98/03576 sind ebenfalls Salze von Phenolsulfonsäure-Formaldehyd-Kondensationsprodukten bekannt, die ein zahlenmittleres Molekulargewicht $M_n$ unterhalb 1500 Dalton und besonders gute Sprühhilfsmitteleigenschaften aufweisen.

Die Verwendung von Trocknungsmitteln, insbesondere von Arylsulfonsäure-Formaldehyd-Kondensationsprodukten, hat jedoch den Nachteil, dass die für die Anwendung erforderliche Filmbildung der Pulverteilchen im redispergierten Zustand nachteilig beeinflusst wird.

Weiterhin wird in der DE-A 10040826 ein Verfahren zur Trocknung von Dispersionen auf Basis von Styrol-Butadien-Copolymeren offenbart, bei dem in Gegenwart von Salzen oligomerer Arylsulfonsäure-Formaldehyd-Kondensaten als Trocknungshilfsmittel sprühgetrocknet wird. Die dort beschriebenen Dispersionen enthalten wenigstens 1,5 Gew.-% einer anionischen oberflächenaktiven Verbindung mit mindestens einer $C_6$-$C_{32}$-Alkylgruppe. Das beschriebene Verfahren zeichnet sich u.a. durch eine gute Redispergierbarkeit und Verfilmung der erhaltenen Pulver aus. Diese sind aber nicht völlig farblos und daher für einige Anwendungszwecke nicht gut einsetzbar.

Darüber hinaus ist Gegenstand der EP-A 1036101 ein Verfahren zur Herstellung von emulgatorfreien, schutzkolloidstabilisierten Copolymerisaten auf Basis von Vinylaromaten und 1,3-Dienen. Aus der DE-A 19853450 sind ebenfalls emulgatorfreie Dispersionspulver ausgehend von Copolymerisaten aus Styrol und Butadien bekannt. Die so erhaltenen emulgatorfreien, schutzkolloidhaltigen Styrol-Butadien-Dispersionen sind jedoch sehr grobteilig und weisen da durch bedingt hohe Konzentrationen des übelriechenden Diels-Alder-Produktes 4-Phenylcyclohexen auf.

Übliche Sprühhilfsmittel (Trocknungshilfsmittel) wie beispielsweise Polyvinylalkohol, Naphthalinsulfonsäure-Formaldehyd-Kondensate, Phenolsulfonsäure-Formaldehyd-Kondensate, Polymaleinsäure oder Polyacrylsäure bilden nach dem Sprühtrocknen mit acrylamidfreien Dispersionen auf Basis von Copolymeren aus Styrol und Butadien unter den üblichen Bedingungen bei anschließender Verfilmung häufig rissige Filme. Eine fehlerfreie Verfilmung des redispergierten Dispersionspulvers ist jedoch für eine Anwendung in vielen Systemen, beispielsweise bei der Mörtelmodifizierung oder im Anstrich notwendig.

Der vorliegenden Erfindung lag daher die Aufgabe zu Grunde, den geschilderten Nachteilen abzuhelfen und ein Verfahren zur Herstellung von Polymerpulvern zu entwickeln, welches möglichst einfach durchzuführen ist und zu Polymerpulvern führt, welche u.a. farblos und geruchlos sind, eine gute Redispergierbarkeit und Verfilmung zeigen und darüber hinaus die Zementrheologie möglichst gering beeinflußen.

Diese Aufgabe wurde überraschend durch ein Verfahren zur Herstellung von Polymerpulvern gelöst, bei dem man zunächst die flüchtigen Bestandteile aus wässrigen Dispersionen filmbildender Polymerer P verdampft, welches dadurch gekennzeichnet ist, dass die wässrige Polymerdispersion vor dem Verdampfen der flüchtigen Bestandteile noch Trocknungshilfsmittel T aufweist, die in einer Menge von 0,1 bis 80 Gew.-%, bezogen auf das Polymer P der Dispersion, zugegen sind, wobei als Trocknungshilfsmittel T Polyvinylformamid verwendet wird.

Filmbildend bedeutet, dass die Polymerteilchen der wässrigen Dispersion bzw. die Pulverteilchen in einem wässrigen Redispergat beim Verdampfen des Wassers (Trocknen) oberhalb einer für sie spezifischen Temperatur, der Mindestfilmbildetemperatur MFT, verschmelzen und einen zusammenhängenden Polymerfilm bilden. Wässriges Redispergat bedeutet eine wässrige Dispersion des Polymerpulvers.

Das als Trocknungshilfsmittel T eingesetzte Polyvinylformamid wird nach dem erfindungsgemäßen Verfahren in einer Menge von 0,1 bis 80 Gew.-%, insbesondere in einer Menge von 1 bis 50 Gew.-%, bevorzugt in einer Menge von 2 bis 30 Gew.-% und insbesondere in einer Menge von 5 bis 20 Gew.-%, bezogen auf das Polymer der Dispersion, zugesetzt.

Dabei empfiehlt es sich, ein solches Polyvinylformamid einzusetzen, welches einen K-Wert (KW), ermittelt nach Fikentscher in Anlehnung an DIN 53726, von 5 bis 50 besitzt (H. Fikentscher, Cellulosechemie 13, Seiten 58 bis 64 und 71 bis 74 (1932); Ermittlung in 0,5 Gew.-% Kochsalzlösung). Besonders bevorzugt wird dabei ein solches Polyvinylformamid eingesetzt, das einen K-Wert (KW) von 10 bis 40 besitzt.

Derartige Polyvinylformamide sind u.a. durch radikalische Polymerisation von Vinylformamid in wässriger Lösung erhältlich. Die Herstellung von Polyvinylformamid ist u.a. aus der EP-B 71050 bekannt, deren Offenbarungsgehalt ausdrücklich Bestandteil der Beschreibung dieser Anmeldung werden soll. Unter der Bezeichnung Polyvinylformamid sollen neben Homopolymerisaten von Vinylformamid insbesondere auch Copolymerisate des Vinylformamids mit bis zu 30 mol-% Struktureinheiten der Formel

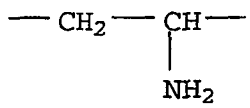

verstanden werden.

Als Polymere für das erfindungsgemäße Verfahren sowie das ebenfalls erfindungsgemässe Polymerpulver kommen im Wesentlichen alle filmbildenden Polymere in Betracht, die wässrige Dispersionen bilden oder als wässrige Dispersion hergestellt werden können. Üblicherweise handelt es sich um Polymere, die aus ethylenisch ungesättigten Monomeren aufgebaut sind, beispielsweise aus:

(a) 80 bis 100 Gew.-% wenigstens eines Monomers, das ausgewählt ist unter vinylaromatischen Verbindungen, Estern aus α,β-monoethylenisch ungesättigten $C_3$-$C_6$-Carbonsäuren und $C_1$-$C_{12}$-Alkanolen, vorzugsweise $C_1$-$C_8$-Alkanolen, Vinyl- und Allylestern von $C_1$-$C_{12}$-Carbonsäuren und konjugierten $C_4$-$C_{10}$-Diolefinen, und
(b) 0 bis 20 Gew.-% wenigstens eines sonstigen Monomers, das wenigstens eine ethylenisch ungesättigte Gruppe aufweist.

Alle Mengenangaben für Monomere sind auf 100 Gew.-%, d.h. auf die Gesamtmenge der zu polymerisierenden Monomere bezogen.

Beispiele für vinylaromatische Verbindungen sind Styrol; α-Methylstyrol, $C_1$-$C_4$-Alkylstyrole wie o-Vinyltoluol und tert.-Butylstyrol.

Bei den Estern von α,β-monoethylenisch ungesättigten Carbonsäuren handelt es sich insbesondere um Ester der Acrylsäure und der Methacrylsäure. Beispiele für solche Ester sind Methyl(meth)acrylat, Ethyl(meth)acrylat, n-Propyl (meth)acrylat, iso-Propyl-(meth)acrylat, n-Butyl(meth)acrylat, iso-Butyl(meth)acrylat, t-Butyl(meth)acrylat, 2-Ethylhexyl (meth)acrylat, n-Decyl(meth)-acrylat oder Dodecyl(meth)acrylat.

Brauchbare Vinyl- und Alkylester sind Vinylacetat, Vinylpropionat, Vinyl-n-butyrat, Vinyllaurat und Vinylstearat sowie die entsprechenden Allylester.

Geeignete konjugierten $C_4$-$C_{10}$-Diolefine sind z.B. Butadien und Isopren.

Beispiele für die Monomere (b) sind:

- ethylenisch ungesättigte Monomere mit Säuregruppen wie Mono- und Dicarbonsäuren mit 3 bis 8 C-Atomen wie Acrylsäure, Methacrylsäure, Crotonsäure, Acrylamidoglykolsäure, Vinylessigsäure, Maleinsäure, Itaconsäure und die Halbester der Maleinsäure mit $C_1$-$C_4$-Alkanolen, ethylenisch ungesättigte Sulfonsäuren wie Vinylsulfonsäure, Allylsulfonsäure, Styrolsulfonsäure, 2-Acrylamidomethylpropansulfonsäure, und ethylenisch ungesättigte Phosphonsäuren, z. B. Vinylphosphonsäure, Allylphosphonsäure, Styrolphosphonsäure und 2-Acrylamido-2-Methyl-propanphosphonsäure und ihre wasserlöslichen Salze, beispielsweise ihre Alkalimetallsalze, vorzugsweise Acrylsäure und Methacrylsäure. Derartige Monomere können in den Polymeren P in einer Menge von bis zu 10 Gew.-%, z.B 0,1 bis 10 Gew.-%, vorzugsweise 0,1 bis 4 Gew.-%, enthalten sein;

- Amide ethylenisch ungesättigter Carbonsäuren, wie Acrylamid und Methacrylamid, sowie die N-Alkylolamide, vorzugsweise die N-Methylolamide ethylenisch ungesättigter Carbonsäuren, wie N-Methylolacrylamid und N-Methylolmethacrylamid. Derartige Monomere können in den Polymeren P in einer Menge von bis zu 10 Gew.-%, z.B 0,1 bis 10 Gew.-%, vorzugsweise 0,1 bis 4 Gew.-%, enthalten sein;

- Hydroxyalkylester ethylenisch ungesättigter Carbonsäuren, insbesondere Hydroxyethyl- und Hydroxypropylester, z. B. Hydroxyethylacrylat, Hydroxypropylacrylat, Hydroxyethylmethacrylat und Hydroxypropylmethacrylat. Derartige Monomere können in den Polymeren P in einer Menge von bis zu 10 Gew.-%, z.B 0,1 bis 10 Gew.-%, vorzugsweise 0,5 bis 6 Gew.-%, enthalten sein

- Acrylnitril und Methacrylnitril. Derartige Monomere können in den Polymeren P in einer Menge von bis zu 10 Gew.-%, z.B 0,5 bis 10 Gew.-% enthalten sein.

- Reaktive Monomere: Zu den reaktiven Monomeren zählen solche, die eine zur Vernetzung geeignete reaktive Funktionalität aufweisen. Hierzu zählen neben den vorgenannten ethylenisch ungesättigten Carbonsäuren, ihren N-Alkylolamiden und Hydroxyalkylestern Monomere, die eine Carbonylgruppe oder eine Epoxygruppe aufweisen, beispielsweise N-Diacetonacrylamid, N-Diacetonmethacrylamid, Acetylacetoxyethylacrylat und Acetylacetoxyethylmethacrylat, Glycidylacrylat und Glycidylmethacrylat. Derartige Monomere können in den Polymeren P in einer Menge von bis zu 10 Gew.-%, z.B 0,5 bis 10 Gew.-% enthalten sein.

- und vernetzende Monomere. Zu den vernetzenden Monomeren zählen solche,die wenigstens zwei nicht konjugierte ethylenisch ungesättigte Bindungen aufweisen, z. B. die Di- und Triacrylate bzw. -methacrylate von Di- und trifunktionellen Alkoholen, z. B. Ethylenglykoldiacrylat, Diethylenglykoldiacrylat, Triethylenglykoldiacrylat, Butandioldiacrylat, Hexandioldiacrylat, Trimethylolpropantriacrylat und Tripropylenglykoldiacrylat. Derartige Monomere können in den Polymeren P in einer Menge von bis zu 2 Gew.-%, vorzugsweise nicht mehr als 1 Gew.-%, z.B 0,01 bis 2 Gew.-%, vorzugsweise 0,01 bis 1 Gew.-%, enthalten sein. In einer bevorzugten Ausführungsform enthalten die Polymere P kein vernetzendes Monomer einpolymerisiert.

Bevorzugt eignet sich das erfindungsgemässe Verfahren zur Herstellung von Polymerpulvern auf Basis von Styrol-Butadien-Copolymeren. Der Begriff Copolymer ist in diesem Zusammenhang nicht einschränkend zu verstehen und umfasst auch solche Polymere, die neben Styrol und Butadien auch weitere ethylenisch ungesättigte Monomere einpolymerisiert enthalten. Styrol-Butadien-Copolymere sind in der Regel aufgebaut aus:

- 10 bis 90 Gew.-%, vorzugsweise 20 bis 80 Gew-%, insbesondere 40 bis 75 Gew.-% Styrol und gegebenenfalls ein oder mehrere, davon verschiedene vinylaromatische Monomere,

- 10 bis 90 Gew.-%, vorzugsweise 20 bis 80 Gew.-%, insbesondere 25 bis 60 Gew.-% 1,3-Butadien, gegebenenfalls in Mischung mit einem anderen konjugierten Diolefin wie Isopren und gegebenenfalls

- bis 20 Gew.-%, vorzugsweise bis 10 Gew.-%, z.B. 0,1 bis 20 Gew.-%, vorzugsweise 0,1 bis 10 Gew.-% ein oder mehrere der vorgenannten Monomere (b)

Das Gewichtsverhältnis von vinylaromatischen Monomeren zu Butadien liegt in der Regel im Bereich von 1:9 bis 9:1, insbesondere im Bereich von 4:1 bis 1:4 und ganz besonders bevorzugt im Bereich von 3:1 bis 1:1.

In einer bevorzugten Ausführungsform der vorliegenden Erfindung ist das Polymer P aufgebaut aus:

- 20 bis 80 Gew.-%, insbesondere 40 bis 75 Gew.-% Styrol
- 20 bis 80 Gew.-%, insbesondere 25 bis 60 Gew.-% Butadien, und gegebenenfalls
- 0,1 bis 10 Gew.-%, vorzugsweise 0,1 bis 5 Gew.-% Carboxylgruppen enthaltendende Monomere, insbesondere Acrylsäure, Methacrylsäure und/oder Itaconsäure.

Besonders geeignet ist das erfindungsgemäße Verfahren zur Herstellung von Polymerpulvern, bei denen das Polymer in der Dispersion eine Glasübergangstemperatur (DSC, midpoint temperature, ASTM D 3418-82) von 65°C, insbesondere 50°C, besonders bevorzugt 30°C nicht überschreitet. Im allgemeinen ist die Glasübergangstemperatur der Polymere wenigstens -60°C, vorzugsweise wenigstens -40°C und insbesondere wenigstens -20°C. Die Glasübergangstemperatur eines Polymeren entspricht nährungsweise der Mindestfilmbildetemperatur oder liegt etwas darüber.

Dabei ist es oft hilfreich, die Glasübergangstemperatur Tg des dispergierten Polymers abzuschätzen. Nach Fox (T.G. Fox, Bull. Am. Phys. Soc. (Ser. II) 1, 123 [1956] und Ullmanns Encyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g^1} + \frac{X^2}{T_g^2} + \cdots\cdots \frac{X^n}{T_g^n}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

Bevorzugte Polymerisatdispersionen sind weiterhin solche, bei denen der gewichtsmittlere Durchmesser $d_w$ der dispergierten Polymerisatpartikel ≥100 nm beträgt. Üblicherweise ist der gewichtsmittlere Durchmesser $d_w$ ≤2000 nm.

Der $d_w$-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wird. Die Ultrazentrifugenmessung liefert die integrale Massenverteilung des Teilchendurchmessers einer Probe. Hieraus läßt sich entnehmen, wieviele Gewichtsprozent der Teilchen einen Durchmesser gleich oder unter einer bestimmten Größe haben.

Die Herstellung der zu trocknenden Polymerisatdispersionen ist bekannt und erfolgt bei Polymeren, die aus ethylenisch ungesättigten Monomeren aufgebaut sind, in der Regel mittels einer radikalischen wässrigen Emulsionspolymerisation, d.h. die Monomere werden in einer wässrigen Emulsion in Gegenwart oberflächenaktiver Substanzen und wenigstens einem Radikalstarter polymerisiert.

Als Radikalstarter (Polymerisationsinitiatoren) kommen alle diejenigen Verbindungen in Betracht, die in der Lage sind, eine radikalische, wässrige Emulsionspolymerisation auszulösen. Hierzu zählen sowohl organische, wie anorganische Peroxide und Hydroperoxide, als auch Azoverbindungen. Ebenfalls geeignet sind Redoxinitiatorsysteme, die in der Regel eine Peroxidverbindung und ein Reduktionsmittel, beispielsweise Ascorbinsäure, Hydroxymethansulfinsäure, Bisulfit-Addukt an Aceton, Natriumsulfit oder -hydrogensulfit, und/oder ein Übergangsmetallion, das seine Wertigkeit ändern kann, z.B. in Form wasserlöslicher Salze wie Eisen-, Vanadium- oder Kupfer-Salze und wasserlösliche Komplexe davon, umfassen. Bevorzugte Initiatorsysteme sind die Peroxide und Hydroperoxide wie Wasserstoffperoxid, tert.-Butylhydroperoxid, und Isopropylhydroperoxid. Bevorzugte Initiatoren sind auch die Salze der Peroxidischwefelsäure, insbesondere deren Alkalimetallsalze (z. B. Kalium- und Natriumsalz) und/oder deren Ammoniumsalze. Üblicherweise wird der Radikalstarter in einer Menge von 0,1 bis 3 Gew.-%, bezogen auf die zu polymerisierende Monomere eingesetzt.

Als oberflächenaktive Substanzen kommen sowohl Schutzkolloide, d. h. wasserlösliche Polymere mit einem Molekulargewicht $M_n \geq 2000$, als auch anionische oder neutrale oberflächenaktive Verbindungen (Emulgatoren) in Betracht, die im Unterschied zu den Schutzkolloiden in der Regel ein Molekulargewicht $M_n$ < 2000 und insbesondere < 1000 aufweisen. Die grenzflächenaktiven Substanzen werden üblicherweise in Mengen bis zu 10 Gew.-%, vorzugsweise 0,1 bis 5 Gew.-%, bezogen auf die zu polymerisierenden Monomere, eingesetzt, wobei anionische Emulgatoren (Verbindungen A0) in der Regel nicht mehr als 1 Gew.-%, z.B. 0,1 bis 1 Gew-% der zu polymerisierenden Monomere ausmachen.

Geeignete Schutzkolloide sind Polyvinylalkohole, Stärke- und Cellulosederivate, Polyacrylsäuren, Copolymerisate der Acrylsäure und der Methacrylsäure mit hydrophoben Monomeren und/oder mit Hydroxylgruppen tragenden

Monomeren, Polyacrylamid oder Vinylpyrrolidon enthaltende Polymerisate.

Geeignete anionische Emulgatoren sind u.a. Salze solcher Verbindungen, die wenigstens eine $C_6$-$C_{32}$-Alkylgruppe, insbesondere eine $C_8$-$C_{22}$-Alkylgruppe und eine zur Salzbildung mit einer Base geeignete Funktionalität, z.B. eine Carboxyl-, Sulfonyl-, Phosphonyl, Phosphat- oder Sulfatgruppe, vorzugsweise eine Sulfat- oder Sulfonatgruppe aufweisen. Bevorzugte Salze weisen als Gegenionen Alkalimetall-, Erdalkalimetall- oder Ammoniumionen und insbesondere Natrium-, Kalium- und Calciumionen auf. Derartige Verbindungen sind aus dem Stand der Technik u.a. aus Houben-Weyl, Methoden der organischen Chemie, Band XIV/1, Makromolekulare Stoffe, Georg-Thieme-Verlag, Stuttgart, 1961, S. 192-208 bekannt.

Beispiele für geeignete anionische Emulgatoren sind Salze von Alkylsulfaten, die von linearen oder verzweigten Alkoholen, z.B. Fett- oder Oxoalkoholen abgeleitet sind (Alkylrest: $C_8$-$C_{32}$), von Schwefelsäurehalbestern ethoxylierter Alkanole, die von linearen oder verzweigten Alkoholen, z.B. Fett- oder Oxoalkoholen abgeleitet sind (EO-Grad: 2 bis 50, Alkylrest: $C_8$ bis $C_{32}$), von Schwefelsäurehalbestern ethoxylierter Alkylphenole mit vorzugsweise linearem Alkylrest (EO-Grad: 2 bis 50, Alkylrest: $C_6$-$C_{22}$), von Alkylsulfonsäuren (Alkylrest: $C_8$-$C_{32}$), von Dialkylestern der Sulfobernsteinsäure (Alkylrest: $C_6$ bis $C_{32}$) und von Alkylarylsulfonsäuren mit vorzugsweise linearem Alkylrest (Alkylrest: $C_6$ bis $C_{32}$). Geeignete anionische Emulgatoren sind auch die Salze der Di-$C_6$-$C_{32}$-alkylderivate des Bis(phenylsulfonyl)ethers und deren technische Gemische, die z. B. als DOWFAX® 2A1 der DOW Chemical Co. im Handel sind.

Bevorzugte sind auch die Verbindungen der allgemeinen Formel I,

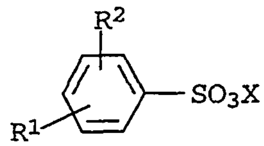

(I)

worin

- $R^1$ für eine $C_6$-$C_{32}$-Alkyl- und vorzugsweise eine $C_8$-$C_{22}$-Alkylgruppe steht,
- $R^2$ für Wasserstoff, $C_1$-$C_4$-Alkyl, einen annellierten Benzolring, der gegebenenfalls mit $C_1$-$C_4$-Alkyl substituiert ist, oder einen Phenoxyrest steht, der gegebenenfalls eine $C_6$-$C_{32}$-Alkylgruppe und/oder eine Sulfonat-Gruppe aufweist, und
- X ein Kationenäquivalent, bedeutet und vorzugsweise für ein Alkalimetallkation, insbesondere für ein Natrium- oder Kaliumion, für ein Äquivalent eines Erdalkalimetallkations, insbesondere 1/2 $Ca^{2+}$ oder für ein Ammoniumion steht.

Besonderes bevorzugt steht $R^2$ in Formel I für Wasserstoff. Besonders bevorzugt ist $R^1$ in para-Stellung zur Sulfonatgruppe gebunden.

Neben den genannten anionischen Emulgatoren kann die im erfindungsgemässen Verfahren eingesetzte Polymerdispersion auch nichtionische oberflächenaktive Verbindungen (nichtionische Emulgatoren) enthalten. Bevorzugte nichtionische Emulgatoren sind araliphatische Emulgatoren, beispielsweise ethoxylierte Mono-, Di- und Trialkylphenole (EO-Grad: 3 bis 50, Alkylrest: $C_6$-$C_{32}$), oder aliphatische Emulgatoren auf Basis alkylsubstituierter Aromaten, beispielsweise Ethoxylate langkettiger Alkohole, z.B. von Oxo- oder Fettalkoholen (EO-Grad: 3 bis 50, Alkylrest: $C_8$-$C_{32}$). Diese Emulgatoren können in der Polymerdispersion in Mengen bis 10 Gew.-%, vorzugsweise bis 4 Gew.-% und insbesondere bis 2 Gew.-%, z.B. 0,1 bis 10, vorzugsweise 0,1 bis 4 Gew.-% und insbesondere 0,2 bis 2 Gew.-% enthalten sein.

Die verwendeten oberflächenaktiven Substanzen können der zu trocknenden Polymerdispersion noch während des Trocknungsvorgangs oder vorzugsweise auch vorher zugesetzt werden. Es empfiehlt sich, die oberflächenaktiven Substanzen bereits während der Herstellung der wässrigen Polymerisation einzusetzen.

Das erfindungsgemäß als Trocknungshilfsmittel T verwendete Polyvinylformamid kann sowohl während des eigentlichen Trocknungsvorgangs, als auch vorher der wässrigen Polymerdispersion hinzugefügt werden. Vorzugsweise wird das Polyvinylformamid vor dem Trocknungsvorgang aber nach der Herstellung der wässrigen Dispersion dieser zugesetzt. Die Zugabe des Polyvinylformamids zu der wässrigen Polymerdispersion kann auch portionsweise zu bestimmten Zeiten nach Beendigung der Herstellung der wässrigen Polymerdispersion geschehen.

Zur Einstellung des gewünschten Molekulargewichtes können bei der Polymerisation geringe Mengen, z.B. 0,01 bis 2 Gew.-%, bezogen auf die zu polymerisierenden Monomere, regelnde Substanzen mitverwendet werden. Geeignete Regler sind z.B. Verbindungen, die eine Thiolgruppe und/oder eine Silangruppe aufweisen (z.B. t-Dodecyl-, n-Dodecylmercaptan oder Mercaptopropyltrimethoxysilan), Allylalkohole oder Aldehyde, wie Formaldehyd, Acetaldehyd und vergleichbare.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Zu diesem Zweck kann man die Monomeren sowohl als Monomermischung als auch als wässrige Monomeremulsion der Polymerisation zuführen

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

In einer bevorzugten Ausführungsform der vorliegenden Erfindung wird die Polymerisation in Anwesenheit von 0,01 bis 3 Gew.-% und insbesondere 0,05 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 400 nm, vorzugsweise 20 bis 120 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch ethylenisch ungesättigte Carbonsäuren, z. B. Acrylsäure und/oder Methacrylsäure und/oder deren Amide, vorzugsweise weniger als 10 Gew.-%, bezogen auf das Gesamtgewicht der Polymerisatteilchen im Saatlatex, einpolymerisiert enthalten kann.

Im Allgemeinen arbeitet man bei Polymerisationstemperaturen zwischen Raumtemperatur und 120 °C, vorzugsweise bei Temperaturen von 40 bis 110 °C und besonders bevorzugt zwischen 50 und 100 °C bei einem Polymerisationsdruck im Bereich von 1 bis 10 bar.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf diesem Wege sind Polymerisatdispersionen mit Polymergehalten bis zu 80 Gew.-%, bezogen auf das Gesamtgewicht der Dispersion, zugänglich. In der Regel wird der Feststoffgehalt der auf diesem Wege hergestellten Polymerisatdispersionen im Bereich von 40 bis 60 Gew.-% liegen. Die so erhältlichen Polymerisatdispersionen können dann, sofern erforderlich, auf den für die Trocknung gewünschten Feststoffgehalt durch Verdünnung mit einem geeigneten Lösungsmittel, beispielsweise mit Wasser oder einer Wasser-Emulgator-Mischung und/oder durch Zugabe einer wässrigen Lösung des Trocknungshilfsmittels eingestellt werden.

Der Feststoffgehalt der zu trocknenden Polymerisatdispersion, die bereits das Trocknungshilfsmittel enthält, liegt in der Regel im Bereich von 10 bis 60 Gew.-%, vorzugsweise im Bereich von 20 bis 55 Gew.-% (jeweils gerechnet als Polymerisat + Trocknungshilfsmittel, bezogen auf das Gesamtgewicht der Dispersion).

Das Verdampfen der flüchtigen Bestandteile aus der wässrigen Polymerisatdispersion (im Folgenden auch als Trocknung bezeichnet) erfolgt in üblicher Weise, beispielsweise durch Gefriertrocknung oder vorzugsweise durch Sprühtrocknung.

Bei der Sprühtrocknung werden die zu trocknenden Polymerisatdispersionen in Gegenwart des Trocknungshilfsmittels in einem Trokkenturm, durch den ein Warmluftstrom geführt wird, getrocknet. Die Temperatur des Warmluftstroms beträgt in der Regel am Eingang des Trockenturms 100 bis 200 °C, vorzugsweise 110 bis 170 °C, und am Turmausgang etwa 30 bis 100 °C, vorzugsweise 50 bis 80 °C. Die zu trocknende Polymerisatdispersion kann gegen den Warmluftstrom oder vorzugsweise parallel in den Warmluftstrom eingeführt werden. Die Zugabe kann über Ein- oder Mehrstoffdüsen oder über eine rotierende Scheibe erfolgen. Die Abscheidung der Polymerisatpulver erfolgt in üblicher Weise, z.B. unter Verwendung von Zyklonen oder Filterabscheidern.

Grundsätzlich kann das als Trocknungsmittel T eingesetzte Polyvinylformamid während des Trocknungsvorganges in Form von Lösungen, beispielsweise als wässrige oder wässrig-alkoholische Lösungen, der zu trocknenden Polymerdispersion zugegeben werden. Vorzugsweise gibt man das Trocknungshilfsmittel vor der Trocknung zu der Polymerisatdispersion. Das Trocknungsmittel kann sowohl als Feststoff oder vorzugsweise als Lösung, z. B. als wässrig-alkoholische Lösung oder insbesondere als wässrige Lösung, zu der Dispersion gegeben werden.

Ferner kann man der zu trocknenden Polymerisatdispersion während des Trocknungsvorganges ein Anticaking-Mittel (Antibackmittel) zusetzen. Hierbei handelt es sich um ein feinteiliges anorganisches Oxid, beispielsweise eine feinteilige Kieselsäure oder ein feinteiliges Silicat, z. B. Talkum. Vorzugsweise weist das feinteilige anorganische Oxid eine mittlere Teilchengrösse im Bereich von 0,01 bis 0,5 µm auf. Besonders bevorzugt wird feinteilige Kieselsäure mit einer mittleren Teilchengröße im Bereich von 0,01 bis 0,5 µm, die sowohl hydrophil als auch hydrophobisiert sein kann. Ganz besonders bevorzugt kommen Mischungen aus hydrophilen und hydrophobisierten Antibaclanitteln zum Einsatz. Das Antibackmittel kann vor oder während der Trocknung der Polymerisatdispersion zudosiert werden. In einer anderen Ausführungsform gibt man das Antibackmittel in eine für Feststoffe geeigneten Mischvorrichtung, beispielsweise

einem Rüttler, Rollstuhl-Schneckenmischer oder ähnlichem, zu dem Polymerpulver.

Sofern erwünscht, wird man das Antibackmittel in einer Menge von 0,5 bis 15 Gew.-% und vorzugsweise in einer Menge von 2 bis 12 Gew.-%, bezogen auf das Polymerpulver (bzw. auf die Summe an Polymer P + Trocknungshilfsmittel in der wässrigen Polymerisatdispersion), einsetzen.

Die nach dem erfindungsgemässen Verfahren erhaltenen Polymerpulver sind ebenfalls Gegenstand der vorliegenden Erfindung. In Anwesenheit von Wasser zeichnen sich wässrige Redispergate der Polymerpulver u.a. durch ein verbessertes Filmbildevermögen aus. Überraschenderweise führt das erfindungsgemässe Verfahren auch zu besseren Ergebnissen bei Sprühtrocknung, beispielsweise zu einer erhöhten Pulverausbeute und zu einer verringerten Belagsbildung. Andere anwendungstechnische Eigenschaften werden überraschenderweise nicht nachteilig beeinflusst.

Die nach dem erfindungsgemässen Verfahren erhaltenen Polymerpulver umfassen:

i wenigstens ein filmbildendes Polymer P,
ii 0,1 bis 80 Gew.-%, bezogen auf das Polymer P, Polyvinylformamid als Trocknungshilfsmittels T,
iii gegebenenfalls oberflächenaktive Verbindungen in einer Menge bis 10 Gew.-%, bezogen auf das Polymer P, und
iv gegebenenfalls Füllstoffe, Pigmente, Anticakingmittel und/oder übliche Hilfsmittel, z.b. Trocknungshilfsmittel des Standes der Technik, Biozide und/oder Entschäumer.

Die erfindungsgemässen Polymerpulver eignen sich als Cobindemittel in mineralischen Bindebaustoffen und gebrauchsfertigen Bindebaustoffzubereitungen, als Bindemittel in Anstrichmitteln, Lakken, Klebstoffen, Beschichtungs- und Dichtungsmassen, Bauklebstoffen, z.B. Fussbodenkleber und insbesondere Fliesenkleber, sowie in Kunstharzputzen.

In besonderer Weise eignen sich die erfindungsgemäß erhältlichen Polymerpulver als Cobindemittel in mineralischen Bindebaustoffen bzw. in gebrauchsfertigen Zubereitungen dieser Baustoffe, sowie in Bauklebstoffen. Diese sind ebenfalls Gegenstand der vorliegenden Erfindung.

Unter mineralischen Bindebaustoffen bzw. ihren Zubereitungen versteht man Zusammensetzungen, die wenigstens ein mineralisches Bindemittel wie Kalk, Gips, Ton und/oder Zement und gegebenenfalls mineralische Zuschläge enthalten. Die gebrauchsfertige Zubereitung wird durch Anrühren mit Wasser in die eigentlichen Baustoffzubereitung überführt, die sich dann, wenn sie sich selbst überlassen ist, an der Luft oder auch unter Wasser, gegebenenfalls unter Einwirkung erhöhter Temperatur steinartig verfestigt. Neben den mineralischen Zuschlägen enthalten mineralische Baustoffzubereitungen auch übliche Hilfsmittel, z. B. je nach Anwendungszweck Verdicker oder Verflüssiger und Entschäumer.

Bevorzugte mineralisches Bindemittel enthalten 70 bis 100 Gew.-% Zement und 0 bis 30 Gew.-% Gips. Insbesondere ist Zement das alleinige mineralische Bindemittel. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist.

In typischer Weise enthalten die Trockenzusammensetzungen mineralischer Bindebaustoffe, bezogen auf die Menge an mineralischem Bindemittel, 0,1 bis 20 Gew.-%, insbesondere 0,5 bis 10 Gew.-% modifizierendes Polymerisatpulver. Der Gewichtsanteil von Polymers zu mineralischem Bindemittel liegt in der Regel im Bereich von 1:100 bis 1:1.

Zur Verbesserung ihrer Verarbeitungseigenschaften setzt man den mineralischen Bindebaustoffen vielfach Cellulosederivate und Microsilica zu. Erste wirken üblicherweise verdickend und letztere bilden normalerweise Thixotropierungsmittel, die die Fließfähigkeit des wäßrigen Mörtels vor seiner Verfestigung im aufgebrachten Ruhestand zusätzlich erniedrigen. Durch Zusatz von Entschäumern (unter dem Aspekt "Trockenmörtel" vorzugsweise in Pulverform) kann im verfestigten Zustand ein praxisgerechter Luftporengehalt (5 bis 20 Vol.-%) des verfestigten zementösen Mörtel erreicht werden.

Sand, z.B. Quarzsand, sowie gegebenenfalls Füllstoffe wie Calciumcarbonat und Pigmente wie Titandioxid oder Eisenoxid, natürliche und synthetische Fasern bilden in der Regel die übrigen Zuschläge.

Bauklebstoffe umfassen z. B. Fussbodenkleber und Fliesenkleber. Sie enthalten als Klebstoffkomponente wenigstens ein erfindungsgemässes Polymerpulver sowie je nach Art der Formulierung Weichmacher, Füllstoffe, Dispergierhilfsmittel, Biozide, sowie gegebenenfalls Wasser, Entschäumer, Verdicker, Thioxotropiermittel und sonstige Zusätze. In einer bevorzugten Ausführungsform enthalten sie auch ein mineralisches Bindemittel, z. B. Zement. Derartige Zubereitungen finden insbesondere als Fliesenkleber Verwendung. Aufgrund des mineralischen Bindemittels zählen sie ebenfalls zu den mineralischen Bindebaustoffen.

Typische mineralische Bindebaustoffe und sonstige Bauklebstoffe wie Fliesenkleber, insbesondere als mineralische Bindebaustofftrockenzubereitung enthalten, (bezogen auf das Gesamtgewicht der in ihnen enthaltenen Feststoffe):

| | |
|---|---|
| 10 bis 60, | vorzugsweise 15 bis 50 Gew.-% mineralisches Bindemittel (vorzugsweise ausschließlich Zement, insbesondere Portlandzement) |
| 0,1 bis 30 | häufig 0,2 bis 15 Gew.-%, insbesondere 0,5 bis 10 Gew.-%, speziell 2 bis 8 Gew.-% erfindungsgemässe Polymerpulver, |

bis zu 25 Gew.-% an sich übliche Hilfsmittel, z.B. Entschäumer, Verdicker, Verflüssiger und Thixotropiermittel, und als Restmenge 30 bis 80 Gew.-% Zuschläge, z.B. Sand, Füllstoffe (z.B. $CaCO_3$), Pigmente (z.B. $TiO_2$) natürliche und/oder synthetische Fasern. Entschäumer werden in der Regel in einer Menge von 0,1 bis 2 Gew.-%, Thixotropiermitel bis 2 Gew.-%, Verflüssiger bis 1 Gew.-% verwendet.

Typische Ausführungsformen mineralischer Bindebaustoffzubereitungen sind zementöse Reparatur- oder Armierungsmörtel. Hierbei weisen übliche Armierungsmörtel zur Steigerung ihrer Rißüberbrükkungsfähigkeit noch natürliche oder synthetische Fasern aus Materialien wie z.B. Dralon (Länge z.B. 1 bis 10 mm, längenbezogene Masse z.B. 3 bis 10 dtex) in einer Menge von bis zu 10 Gew.-% auf. Eine Übersicht über Hilfsstoffe und Zuschläge gibt H. Reul in "Handbuch der Bauchemie, Verlag für chemische Industrie, H.Zielkowsky KG, Augsburg, 1991.

Eine weitere bevorzugte Ausführungsform mineralischer Bindebaustoffzubereitungen sind Fliesenkleber. Typische Fliesenkleber enthalten als Trockenzubereitung neben dem Polymerpulver, das, bezogen auf 100 Gew.-% Trokkenzubereitung in der Regel 0,5 bis 10 Gew.-% insbesondere 2 bis 8 Gew.-% ausmacht, 15 bis 50 Gew.-% mineralisches Bindemittel, insbesondere Zement, 30 bis 80 Gew.-% hierfür übliche Zuschläge, insbesondere Quarzsand, z. B. mit einer Sieblinie von 0,063-0,4 mm, und/oder Calciumcarbonat, sowie übliche Hilfsmittel wie Verdicker, Entschäumer, Biozide, Dispergierhilfsmittel, Plastifiziermittel (Weichmacher), Filmbildehilfsmittel etc. in einer Menge von 0,1 bis 25 Gew.-%.

Das erfindungsgemäße Verfahren zur Herstellung von Polymerpulvern ist technisch ohne großen Aufwand durchzuführen und führt zu Polymerpulvern, die u.a. farblos und geruchlos sind, eine gute Redispergierbarkeit und Verfilmung zeigen und darüber hinaus die Zementrheologie praktisch nicht beeinflußen. Die ebenfalls erfindungsgemäßen Polymerpulver sind im Gegensatz zu Naturprodukten gut verfügbar und ergeben einen farblosen Film.

Beispiele

I Einsatzmaterialien

Polymerdispersion D1: Wassrige Styrol-Butadien-Dispersion enthaltend 50 Gew.-% Polymer mit einer Glasübergangstemperatur Tg von ca. 4°C, die 53 Gew.% Styrol, 42 Gew.-% Butadien und 4,5 Gew.-% Acrylsäure und 0,5 Gew.-% Itaconsäure einpolymerisiert enthält und die noch mit 0,5 Gew.-%, bezogen auf das Polymer, eines sulfatierten Fettalkoholethoxylats mit einem Ethoxilierungsgrad von 2 bis 3 als Emulgator stabilisiert ist. Die Polymerdispersion hatte eine Teilchengröße von 130 nm und entsprach der in DE-A 10040826 auf Seite 7 unten beschriebenen Dispersion D1.

Diese wässrige Polymerdispersion wurde in den erfindungsgemäßen Beispielen 1 und 2 sowie den Vergleichsbeispielen A bis D mit den nachstehend angegebenen wasserlöslichen Polymeren als Trocknungshilfsmittel T versetzt.

Polymerdispersion $D_2$: Wässrige Styrol-Acrylat-Dispersion entspricht der in der EP-B 914366 auf der Seite 6, ab Zeile 28 im Absatz 1.1 beschriebenen Dispersion $D_1$. Diese wässrige Dispersion wurde in den erfindungsgemäßen Beispielen 3 und 4 verwendet.

II Herstellung des Polymerpulvers

Die Polymerdispersionen $D_1$ bzw. $D_2$ der einzelnen Beispiele 1 bis 4 sowie der Vergleichsbeispiele A bis C wurden in einem Technikumstrockner sprühgetrocknet. Das Trocknungshilfsmittel T wurde jeweils in einer Menge von 10 Gew.-%, bzw. 12,5 Gew.-%, bezogen auf das Polymere P der wässrigen Dispersion, zugesetzt, als Rieselhilfsmittel diente ein handelsübliches Antiblockmittel auf Kieselgelbasis.

Der Feststoffgehalt der Sprühspeise betrug 30 Gew.-%. Die Zerstäubung erfolgte über eine Teflon-Zweistoffdüse (Spaltweite 1,3 mm), die Eingangstemperatur betrug 130°C, die Ausgangstemperatur 60°C.

Als Trocknungshilfsmittel wurden eingesetzt:

- T1: Polyvinylformamid K-W: 19,4
- T2: Polyvinylformamid K-W: 30,5
- T3: Naphthalinsulfonsäure-Formaldehyd-Kondensationsprodukt als Calciumsalz hergestellt nach Beispiel 2.1 (Sprühhilfsmittel S1) der EP-B 914366
- T4: Co-Polymer aus 50 Teilen Acrylsäure und 50 Teilen Maleinsäure mit Molgewicht nach GPC ca. 3000 g/mol

- T5: Trocknungshilfsmittel T3 versetzt mit 25 % Arylsulfonat, als anionischer Emulgator gemäß der DE-A 1004826, Seite 8 oben

III Ergebnisse

Die Ergebnisse der erfindungsgemäßen Beispiele 1 bis 4 sowie der Vergleichsbeispiele A bis C sind in der nachfolgenden Tabelle 1 wiedergegeben. In dieser Tabelle ist nach dem jeweiligen Beispiel bzw. Vergleichsbeispiel die Menge und die Art des im Einzelnen verwendeten Trocknungshilfsmittels T angegeben. Weiterhin führt die Tabelle die Werte der Ausbeute und der Redispergierbarkeit auf und zeigt die qualitativen Benotungen hinsichtlich Pulver, Verfilmung und Farbe.

Tabelle 1

| Beispiele und Trocknungshilfsmittel T | Ausbeute | Redispergierbarkeit | Pulver | Verfilmung | Film |
|---|---|---|---|---|---|
| Beispiel 1: Dispersion $D_1$; 10 Gew.-% $T_1$ | 78 % | gut | 2 | 1 | farblos |
| Beispiel 2: Dispersion $D_1$; 10 Gew.-% $T_2$ | 79 % | gut | 1-2 | 1 | farblos |
| Beispiel 3: Dispersion $D_2$; 10 Gew.-% $T_1$ | 81 % | gut | 1-2 | 1-2 | farblos |
| Beispiel 4: Dispersion $D_2$; 10 Gew.-% $T_2$ | 76 % | gut | 1 | 1 | farblos |
| Vergleichsbeispiel A Dispersion $D_1$ 10 Gew.-% $T_3$ | 86 % | mäßig | 1-2 | 5 | beige |
| Vergleichsbeispiel B Dispersion $D_1$ 10 Gew.-% $T_4$ | 72 % | mäßig | 2 | 5 | farblos |
| Vergleichsbeispiel C Dispersion $D_1$ 12,5 Gew.-% $T_5$ | 63 % | gut | 1 | 1-2 | beige |

Benotung - Pulver

1 = keine Verklumpung
2 = minimale Verklumpung, leicht pulverisierbar
3 = leichte Verklumpung, mäßig pulverisierbar
4 = größere Verklumpung, leichte pulverisierbar
5 = größere Verklumpung, schwer pulverisierbar
6 = größere Verklumpung, nicht pulverisierbar

Benotung - Filmbildung

1 = ohne Fehler verfilmt
2 = mit Narben verfilmt
3 = Schwundrisse am Rand
4 = Schwundrisse großflächig
5 = total rissig
6 = keine Verfilmung

Tabelle 1 zeigt die Ergebnisse der Sprühtrocknung. Die mit dem erfindungsgemäßen Sprühhilfsmittel hergestellten Pulver konnten ohne Probleme mit hoher Ausbeute sprühgetrocknet werden, sind gut redispergierbar, zeigen eine fehlerfreie Verfilmung und sind nicht verfärbt (farblos).

Redispergierbarkeit: 30 g des nach II hergestellten Polymerpulvers wurde in einem Standzylinder in 70 ml entionisiertem Wasser dispergiert und 4 Stunden bei Raumtemperatur belassen und anschliessend visuell beurteilt, wie stark sich die Polymerphase von der Wasserphase abgesetzt hatte.

Verfilmung: Aus den redispergierten Dispersionspulvern wurde ein Polymerfilm gegossen, und anschliessend bei Raumtemperatur 4 Tage getrocknet. Die Qualität des Films wurde visuell wie in Tabelle 1 angegeben, beurteilt.

Ermittlung der K-Werte (K-W): nach Fikentscher, in Anlehnung an-DIN 53726, in 0,5 %-iger wässriger Kochsalzlösung.

**Patentansprüche**

1. Verfahren zur Herstellung von Polymerpulvern durch Verdampfen der flüchtigen Bestandteile aus wässrigen Dispersionen filmbildender Polymere P, **dadurch gekennzeichnet, dass** die wässrige Polymerdispersion vor dem Verdampfen der flüchtigen Bestandteile noch Trocknungshilfsmittel T aufweist, die in einer Menge von 0,1 bis 80 Gew.-%, bezogen auf das Polymer P der Dispersion, zugegen sind, wobei als Trocknungshilfsmittel T Polyvinylformamid verwendet wird.

2. Verfahren nach Anspruch 1, **dadurch gekennzeichnet, dass** das als Trocknungshilfsmittel T verwendete Polyvinylformamid in einer Menge von 1 bis 50 Gew.-%, bezogen auf das Polymer P der Dispersion, zugegen ist.

3. Verfahren nach den Ansprüch 1 oder 2, **dadurch gekennzeichnet, dass** das als Trocknungshilfsmittel T eingesetzte Polyvinylformamid einen K-Wert (KW), ermittelt nach Fikentscher in Anlehnung an DIN 53726, von 5 bis 50 besitzt.

4. Verfahren nach Anspruch 3, **dadurch gekennzeichnet, dass** das als Trocknungshilfsmittel T eingesetzte Polyvinylformamid einen K-Wert (KW) von 10 bis 40 besitzt.

5. Verfahren nach einem der Ansprüche 1 bis 4, **dadurch gekennzeichnet, dass** das Polymer in der Dispersion ein Styrol-Butadien-Copolymer ist.

6. Verfahren nach einem der Ansprüche 1 bis 5, **dadurch gekennzeichnet, dass** das Polymer in der Dispersion eine Glasübergangstemperatur Tg unterhalb 65 °C aufweist.

7. Verfahren nach einem der Ansprüche 1 bis 6, **dadurch gekennzeichnet, dass** die Polymerdispersion zusätzlich wenigstens einen Emulgator in einer Menge bis 10 Gew.-%, bezogen auf das Polymer, enthält.

8. Verfahren nach einem der Ansprüche 1 bis 7, **dadurch gekennzeichnet, dass** das Verdampfen der flüchtigen Bestandteile aus der wässrigen Polymerdispersion nach einem Sprühtrocknungsverfahren erfolgt.

9. Polymerpulver, erhältlich durch ein Verfahren gemäss einem der Ansprüche 1 bis 8.

10. Polymerpulver nach Anspruch 9, umfassend:

    i wenigstens ein filmbildendes Polymer P,
    ii 0,1 bis 80 Gew.-%, bezogen auf das Polymer P, Polyvinylformamid als Trocknungshilfsmittels T
    iii gegebenenfalls oberflächenaktive Verbindungen in einer Menge bis 10 Gew.-%, bezogen auf das Polymer P, und
    iv gegebenenfalls Füllstoffe, Pigmente, Anticakingmittel und/oder übliche Hilfsmittel.

11. Verwendung des Polymerisatpulvers nach Anspruch 9 oder 10 als Cobindemittel in mineralischen Bindebaustoffen und gebrauchsfertigen Bindebaustoffzubereitungen, als Bindemittel in Anstrichmitteln, Lacken, Klebstoffen, Beschichtungs- und Dichtungsmassen, Bauklebstoffen und in Kunstharzputzen.

12. Mineralischer Bindebaustoff, enthaltend ein Polymerpulver gemäß einem der Ansprüche 9 oder 10.

13. Mineralischer Bindebaustoff nach Anspruch 12 in Form einer Trockenmörtelzubereitung, bestehend aus

- 10 bis 60 Gew.-% mineralisches Bindemittel,
- 0,1 bis 30 Gew.-% Polymerpulver gemäß einem der Ansprüche 9 oder 10,
- bis zu 25 Gew.-% für mineralische Bindebaustoffe übliche Hilfsmittel und
- als Restmenge Zuschläge wie Sand, Füllstoffe, Pigmente, natürliche Fasern und/oder synthetische Fasern.

**14.** Mineralischer Bindebaustoff nach Anspruch 12 in Form einer Bauklebstoff-Trockenzubereitung bestehend aus

- 15 bis 50 Gew.-% mineralisches Bindemittel
- 0,5 bis 10 Gew.-% Polymerpulver, gemäss einem der Ansprüche 9 oder 10
- 0,1 bis 25 Gew.-% für Bauklebstoffe übliche Hilfsmittel
- 30 bis 80 Gew.-% für Bauklebstoffe übliche Zuschläge.

**Claims**

**1.** A process for preparing a polymer powder by evaporating the volatile constituents from an aqueous dispersion of a film-forming polymer P, wherein prior to the evaporation of the volatile constituents the aqueous polymer dispersion still comprises drying assistants T, present in an amount of from 0.1 to 80% by weight, based on the polymer P of the dispersion, there being used as drying assistant T polyvinylformamide.

**2.** The process according to claim 1, wherein the polyvinylformamide used as drying assistant T is present in an amount of from 1 to 50% by weight, based on the polymer P of the dispersion.

**3.** The process according to claim 1 or 2, wherein the polyvinylformamide used as drying assistant T has a K value (KW), determined by the method of Fikentscher in accordance with DIN 53726, of from 5 to 50.

**4.** The process according to claim 3, wherein the polyvinylformamide used as drying assistant T has a K value (KW) of from 10 to 40.

**5.** The process according to any of claims 1 to 4, wherein the polymer in the dispersion is a styrenebutadiene copolymer.

**6.** The process according to any of claims 1 to 5, wherein the polymer in the dispersion has a glass transition temperature Tg of less than 65°C.

**7.** The process according to any of claims 1 to 6, wherein the polymer dispersion further comprises at least one emulsifier in an amount of up to 10% by weight, based on the polymer.

**8.** The process according to any of claims 1 to 7, wherein the volatile constituents are evaporated from the aqueous polymer dispersion following a spray drying process.

**9.** An addition polymer powder obtainable by a process according to any of claims 1 to 8.

**10.** The addition polymer powder according to claim 9, comprising

i at least one film-forming polymer P,
ii from 0.1 to 80% by weight, based on the polymer P, of polyvinylformamide as drying assistant T,
iii if desired, surface-active compounds in an amount of up to 10% by weight, based on the polymer P, and
iv if desired, fillers, pigments, anticaking agents and/or customary auxiliaries.

**11.** The use of a polymer powder according to claim 9 or 10 as a cobinder in mineral binding construction materials and ready-to-use binding construction material formulations, as binders in paints, varnishes, adhesives, coating materials, sealants, construction adhesives or synthetic resin renders.

**12.** A mineral binding construction material comprising a polymer powder according to either of claims 9 and 10.

**13.** The mineral binding construction material according to claim 12 in the form of a dry mortar formulation, consisting of

- from 10 to 60% by weight of mineral binder,

- from 0.1 to 30% by weight of polymer powder according to either of claims 9 and 10,
- up to 25% by weight of auxiliaries customary for mineral binding construction materials, and
- as the remainder, aggregates such as sand, fillers, pigments, natural fibers and/or synthetic fibers.

**14.** The mineral binding construction material according to claim 12 in the form of a dry construction adhesive formulation, consisting of

- from 15 to 50% by weight of mineral binder,
- from 0.5 to 10% by weight of polymer powder according to either of claims 9 and 10,
- from 0.1 to 25% by weight of auxiliaries customary for construction adhesives, and
- from 30 to 80% by weight of aggregates customary for construction adhesives.

**Revendications**

**1.** Procédé de préparation de poudres de polymère par évaporation d'éléments volatils à partir de dispersions aqueuses de polymères filmogènes P, **caractérisé en ce que** la dispersion aqueuse de polymère présente encore, avant l'évaporation des éléments volatils, des adjuvants de séchage T qui sont ajoutés en une quantité de 0,1 à 80 % en poids, par rapport au polymère P de la dispersion, du polyvinylformamide étant utilisé comme adjuvant de séchage T.

**2.** Procédé suivant la revendication 1, **caractérisé en ce que** le polyvinylformamide utilisé comme adjuvant de séchage T est ajouté en une quantité de 1 à 50 % en poids, par rapport au polymère P de la dispersion.

**3.** Procédé suivant la revendication 1 ou 2,
**caractérisé en ce que** le polyvinylformamide mis en oeuvre comme adjuvant de séchage T possède une valeur K (KW), déterminée selon Fikentscher en s'appuyant sur la norme DIN 53726, de 5 à 50.

**4.** Procédé suivant la revendication 3, **caractérisé en ce que** le polyvinylformamide mis en oeuvre comme adjuvant de séchage T possède une valeur K (KW) de 10 à 40.

**5.** Procédé suivant l'une des revendications 1 à 4, **caractérisé en ce que** le polymère dans la dispersion est un copolymère de styrène-butadiène.

**6.** Procédé suivant l'une des revendications 1 à 5, **caractérisé en ce que** le polymère dans la dispersion présente une température de transition vitreuse Tg inférieure à 65°C.

**7.** Procédé suivant l'une des revendications 1 à 6, **caractérisé en ce que** la dispersion de polymère contient en supplément au moins un agent émulsionnant en une quantité allant jusqu'à 10 % en poids, par rapport au polymère.

**8.** Procédé suivant l'une des revendications 1 à 7, **caractérisé en ce que** l'évaporation des éléments volatils à partir de la dispersion aqueuse de polymère a lieu suivant un procédé de séchage par pulvérisation.

**9.** Poudre de polymère que l'on peut obtenir par un procédé suivant l'une des revendications 1 à 8.

**10.** Poudre de polymère suivant la revendication 9, comprenant :

i au moins un polymère filmogène P,
ii 0,1 à 80 % en poids, par rapport au polymère P, de polyvinylformamide comme adjuvant de séchage T,
iii éventuellement des composés tensioactifs en une quantité allant jusqu'à 10 % en poids, par rapport au polymère P, et
iv éventuellement des charges, des pigments, des agents antiagglutinants et/ou des adjuvants usuels.

**11.** Utilisation de la poudre de polymère suivant la revendication 9 ou 10, comme coliant dans des matériaux de construction liants minéraux et des compositions de matériaux de construction liants prêtes à l'usage, comme liant dans des peintures, des vernis, des colles, des masses d'enduction et d'étanchéification, des adhésifs de construction et des enduits en résine synthétique.

**12.** Matériau de construction liant minéral contenant une poudre de polymère suivant l'une des revendications 9 et 10.

**13.** Matériau de construction liant minéral suivant la revendication 12, sous la forme d'une composition de mortier sec, constitué

- de 10 à 60 % en poids de liant minéral,
- de 0,1 à 30 % en poids de poudre de polymère suivant l'une des revendications 9 et 10,
- jusqu'à 25 % en poids d'adjuvants usuels pour des matériaux de construction liants minéraux, et
- sous la forme d'une quantité résiduaire, d'additions telles que du sable, des matières de remplissage, des pigments, des fibres naturelles et/ou des fibres synthétiques.

**14.** Matériau de construction liant minéral suivant la revendication 12, sous la forme d'une composition sèche d'adhésif de construction, constitué

- de 15 à 50 % en poids de liant minéral,
- de 0,5 à 10 % en poids de poudre de polymère suivant l'une des revendications 9 et 10,
- de 0,1 à 25 % en poids d'adjuvants courants pour des adhésifs de construction,
- de 30 à 80 % en poids d'additions courantes pour des adhésifs de construction.